# EUROPÄISCHE PATENTSCHRIFT

(11) **EP 3 921 606 B1**
(45) Veröffentlichungstag und Bekanntmachung des Hinweises auf die Patenterteilung: **20.11.2024**
(21) Anmeldenummer: 20718154.6
(22) Anmeldetag: 23.03.2020
(51) Int. Cl.: G01G 21/26, G01G 23/01

(54) **WÄGEEINRICHTUNG UND VERFAHREN ZU IHRER ÜBERPRÜFUNG**
WEIGHING DEVICE AND METHOD FOR CHECKING SAID DEVICE
DISPOSITIF DE PESÉE ET PROCÉDÉ DE CONTRÔLE

(30) Priorität: 27.03.2019 DE 102019204276
(43) Veröffentlichungstag der Anmeldung: 15.12.2021
(73) Patentinhaber: Siemens Aktiengesellschaft, 80333 München (DE)
(72) Erfinder: SCHÖTTINGER, Martin, 76187 Karlsruhe (DE)
(74) Vertreter: Siemens Patent Attorneys
(86) Internationale Anmeldenummer: PCT/EP2020/057944
(87) Internationale Veröffentlichungsnummer: WO 2020/193464

(56) Entgegenhaltungen:
- WO-A2-02/12840
- DE-A1- 4 006 375

## Beschreibung

Wägeeinrichtungen (Waagen) im eichpflichtigen Betrieb müssen von einer benannten Stelle (Eichbehörde) bzw. einer speziell autorisierten Person vor Ort mit Referenzgewichten (Prüfgewichten) justiert und geprüft werden. Dazu ist spezialisiertes und autorisiertes Personal notwendig, um zu gewährleisten, dass die Prüfungen manipulationsfrei durchgeführt werden.

Derzeit muss der Betreiber einer eichpflichtigen Waage eine autorisierte Person laden, um die Eichüberprüfungen mit den Prüfgewichten durchzuführen zu lassen. Diese Person muss die Prüfgewichte mitbringen. Hierdurch entstehen Kosten und zeitliche Abhängigkeiten.

Aus der Patentanmeldung DE 40 06 375 A1 ist eine Waage bekannt, die mittels Eichgewichte geeicht werden kann. Die Eichgewichte sind mit elektrischen Kontakten versehen, die bei einem Auflegen an Ecken der Waage dort angebrachte elektrische Kontakte kontaktieren. Die Eichgewichte weisen eine batteriebetriebene Gewichtselektronik auf, über die die Eichgewichte codierbar sind. Durch die Kontaktierung und die Codierung der Eichgewichte wird protokolliert, welche Eichgewichte an welcher Ecke aufgelegt worden sind, um die Eichung durchzuführen.

Der Erfindung liegt die Aufgabe zugrunde, den personellen Aufwand für die Prüfung oder Nachprüfung von Wägeeinrichtungen zu verringern.

Gemäß der Erfindung wird die Aufgabe durch die in Anspruch 1 definierte Wägeeinrichtung und das in Anspruch 6 angegebene Verfahren gelöst.

Vorteilhafte Weiterbildungen der erfindungsgemäßen Wägeeinrichtung bzw. des Verfahrens sind in den Unteransprüchen angegeben.

Gegenstand der Erfindung ist somit eine Wägeeinrichtung mit einem Lastaufnehmer zum Erfassen des Gewichts von Wägegut, einer Auswerteeinrichtung zum Ermitteln eines Gewichtswerts anhand des von dem Lastaufnehmer erfassten Gewichts und einem Echtzeit-Lokalisierungssystem, das einen Lokalisierungsrechner umfasst, der dazu ausgebildet ist, eine Kennung und die Position eines mit einem Lokalisierungs-Tag versehenen Prüfgewichts auf dem Lastaufnehmer zu ermitteln und an die Auswerteeinrichtung zu übermitteln, die dazu ausgebildet ist, anhand der ermittelten Kennung und Position des Prüfgewichts und seines ermittelten Gewichtswerts eine automatische eichkonforme Überprüfung, z. B. eine eichkonforme Prüfung, der Wägeeinrichtung herbeizuführen.

Das Echtzeit-Lokalisierungssystem besteht erfindungsgemäß aus mehreren festen Referenzpunkten (Empfangsmodule, Anchor), die Signallaufzeiten zu dem Lokalisierungs-Tag messen und drahtgebunden oder über Funk an einen Lokalisierungsrechner übermitteln, der die Messungen in eine tatsächliche Position umrechnet.

Gegenstand der Erfindung ist ferner ein Verfahren zum Prüfen einer Wägeeinrichtung, wobei ein mit einem Lokalisierungs-Tag versehenes Prüfgewicht auf einem Lastaufnehmer der Wägeeinrichtung platziert und sein Gewichtswert ermittelt wird, mittels eines Echtzeit-Lokalisierungssystem eine Kennung und die Position des Prüfgewichts auf dem Lastaufnehmer automatisch ermittelt wird, und anhand der ermittelten Kennung und Position des Prüfgewichts und seines ermittelten Gewichtswerts eine automatische Überprüfung der Wägeeinrichtung herbeigeführt wird.

Die mit Lokalisierungs-Tags versehenen Prüfgewichte können an den Anwender versandt werden, der dann die eichkonforme Prüfung oder eine anderweitige Überprüfung der Wägeeinrichtung selbst vornehmen kann. Dabei wird von dem Echtzeit-Lokalisierungssystem über das Lokalisierungs-Tag des Prüfgewichts automatisch festgestellt, ob bzw. dass das richtige Gewicht vorschriftsmäßig an der richtigen Stelle auf dem Lastaufnehmer der Wägeeinrichtung aufgelegt worden ist. So ist es insbesondere bei Plattform-Waagen erforderlich, dass die Prüfgewichte auch außermittig an allen Ecken der Plattform platziert werden, was erfindungsgemäß automatisch überprüft und verifiziert wird. Echtzeit-Lokalisierungssysteme (Real-Time Location System - RTLS) sind allgemein bekannt und werden für das Auffinden, Lokalisieren und Tracking von Personen, Produkten, Gegenständen und Geräten benutzt, wobei sie auf der Basis von Funkverbindungen Positionsdaten zentimetergenau übermitteln.

Das Echtzeit-Lokalisierungssystem stellt in Bezug auf eine eichkonforme Prüfung einen rechtlich relevanten manipulationssicheren Teil der Wägeeinrichtung dar, der, z. B. zusammen mit der Auswerteeinrichtung, in einem versiegelbaren Gehäuse angeordnet sein kann, so dass die Wägeeinrichtung insgesamt den eichgesetzlichen Vorschriften entspricht. Alternativ kann die Kennung und Position des Prüfgewichts von einem sich außerhalb der aus dem Lastaufnehmer und der Auswerteeinrichtung bestehenden eigentlichen Waage (bzw. Waage in engerem Sinne) befindlichen externen Echtzeit-Lokalisierungssystem ermittelt und über einen im Falle der eichkonformen Prüfung sicheren Informationskanal an die Auswerteeinrichtung der Waage übermittelt werden. Bei nicht-eichkonformen Prüfungen kann diese Übermittlung auch nicht-gesichert erfolgen.

Anhand der von dem Echtzeit-Lokalisierungssystem ermittelten Kennung und Position des Prüfgewichts und des von der Auswerteeinrichtung ermittelten Gewichtswerts des Prüfgewichts kann die Auswerteeinrichtung eine automatische Prüfung der Waage bzw. Wägeeinrichtung herbeiführen. Dazu kann die Auswerteeinrichtung über eine sichere Verbindung zu einer entfernten Stelle, beispielsweise einem Server oder einem Cloud-Dienst einer Eichbehörde, verfügen, um von dort Soll-Informationen in Bezug auf das Prüfgewicht zu erhalten und/oder um dorthin Ist-Informationen in Bezug auf das Prüfgewicht zu übermitteln. Bei den Soll-Informationen kann es sich um die tatsächliche Kennung des Prüfgewichts, sein tatsächliches Gewicht und eine Soll-Position des Prüfgewichts auf dem Lastaufnehmer handeln. Die Ist-Informationen können die von dem Echtzeit-Lokalisierungssystem erfasste Kennung und Position des Prüfgewichts und den von der Auswerteeinrichtung ermittelten Gewichtswert umfassen.

Je nach Ausführung können die Ist-Informationen und Soll-Informationen in der Auswerteeinrichtung oder in der entfernten Stelle geprüft, insbesondere miteinander verglichen werden, um die automatische eichkonforme Prüfung zu verifizieren, d. h., nachzuweisen, dass die Waage die eichgesetzlichen Anforderungen erfüllt. So wird anhand der Kennung geprüft, ob das richtige Prüfgewicht auf den Lastaufnehmer der Waage aufgelegt worden ist. Die korrekte Position des Prüfgewichts auf dem Lastaufnehmer wird durch Vergleich der erfassten IstPosition mit der vorgegebenen Soll-Position verifiziert. Schließlich wird der von der Waage ermittelte Gewichtswert mit dem bekannten tatsächlichen Gewichtswert des Prüfgewichts verglichen. Sofern die Prüfung in der Auswerteinrichtung der Waage erfolgt, wird das Ergebnis der Prüfung über die sichere Verbindung an die entfernte Stelle übermittelt. Die für die Prüfung erfassten Ist-Informationen und das Ergebnis der Prüfung können mit manipulationssicher mit einem Zeitstempel versehen und nach gesetzlichen Anforderungen archiviert werden, wozu ein Zeitstempel der Auswerteinrichtung der Waage und/oder des Echtzeit-Lokalisierungssystems verwendet werden kann.

Um das Prüfgewicht korrekt auf dem Lastaufnehmer der Waage platzieren zu können, kann die Soll-Position des Prüfgewichts von der entfernten Stelle an die Waage übermittelt und dort über eine Ausgabeeinheit einer Bedienperson mitgeteilt werden. Dies kann z. B. visuell auf einem Monitor oder auditiv über ein Headset o. dgl. erfolgen. Die entfernte Stelle kann in vorteilhafter Weise einen digitalen Zwilling der Waage enthalten, anhand dessen per Fernwartung exakt vorgegeben werden kann, wo Prüfgewichte auf der Waage aufgebracht werden sollen, um beispielsweise Kraftnebenschlüsse oder sonstige Fehler zu lokalisieren.

Im Weiteren wird die Erfindung beispielhaft und unter Bezugnahme auf die Figuren der Zeichnung erläutert, von denen
- Figur 1: ein erstes und
- Figur 2: ein weiteres Ausführungsbeispiel der erfindungsgemäßen Wägeeinrichtung zeigen.

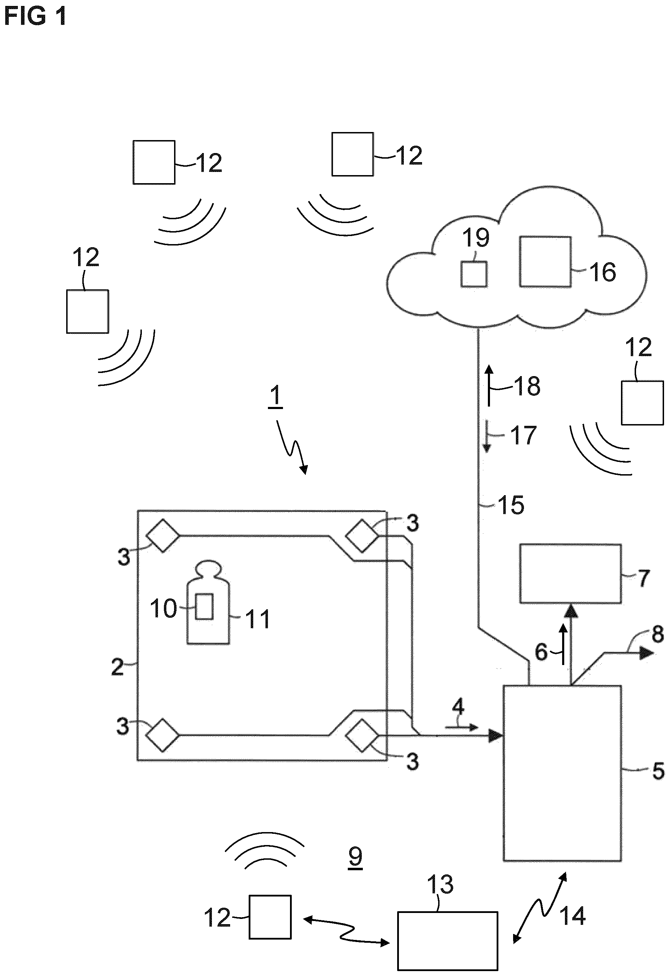

Figur 1 zeigt ein vereinfachtes schematisches Blockschaltbild einer Wägeeinrichtung, hier einer Plattformwaage 1, mit einem Lastaufnehmer (Plattform) 2 zum Erfassen des Gewichts von Wägegut. Die Plattform 2 ruht an ihren vier Ecken auf Wägezellen 3, deren digitale oder analoge Messsignale 4 einer Auswerteeinrichtung 5 zugeführt werden, die die Messignale 4 auswertet und daraus einen Gewichtswert 6 des Wägeguts ermittelt. Der Gewichtswert 6 kann auf einer Hauptanzeige 7 der Waage 1 angezeigt oder anderweitig über eine Verbindung 8 zum Zweck der Dokumentation, Anzeige, Abrechnung o. dgl. ausgegeben werden. Die Wägeeinrichtung umfasst weiterhin ein funkbasiertes Echtzeit-Lokalisierungssystem (RTLS) 9, das dazu dient, eine Kennung und die Position eines mit einem Lokalisierungs-Tag (RTLS Transponder) 10 versehenen Prüfgewichts 11 auf dem Lastaufnehmer 2 zu ermitteln und an die Auswerteeinrichtung 5 der Waage 1 zu übermitteln. Das Echtzeit-Lokalisierungssystem 9 besteht aus mehreren festen Referenzpunkten (Empfangsmodule, Anchor) 12, die Signallaufzeiten zu dem Lokalisierungs-Tag 10 messen und drahtgebunden oder über Funk an einen Lokalisierungsrechner 13 übermitteln, der die Messungen in eine tatsächliche Position umrechnet. Der Lokalisierungsrechner 13 übermittelt die Kennung und die Position des Prüfgewichts 11 über eine drahtlose oder drahtgebundene Verbindung 14 an die Auswerteeinrichtung 5 der Waage 1. Die Funktion des Lokalisierungsrechners 13 kann auch im in einem der Referenzpunkten 12 oder direkt in der Auswerteeinrichtung 5 realisiert sein.

Das Prüfgewicht 11 kann zum Zwecke der Eichprüfung von einer befugten Stelle, z. B. Eichbehörde, angefordert werden. Der Lokalisierungs-Tag 10 ist in einer solchen Weise an dem Prüfgewichts 11 befestigt, dass er nicht manipuliert oder zerstörungsfrei von ihm gelöst werden kann. Für den Falle der eichkonformen Prüfung ist auch die Verbindung 14 zwischen dem Echtzeit-Lokalisierungssystem 9 und der Auswerteeinrichtung 5 der Waage 1 geschützt. Bei nicht-eichkonformen Prüfungen kann diese Übermittlung der Kennung und Position des Prüfgewichts 11 auch nicht-gesichert erfolgen.

Die Auswerteeinrichtung 5 kann über eine sichere Verbindung 15 mit einer entfernten Stelle 15, beispielsweise einem Server oder einem Cloud-Dienst einer Eichbehörde, verfügen, um von dort Soll-Informationen 17 in Bezug auf das Prüfgewicht 12 wie die tatsächliche Kennung des Prüfgewichts 11, sein tatsächliches Gewicht und eine Soll-Position des Prüfgewichts 11 auf dem Lastaufnehmer 2 zu erhalten. Um das Prüfgewicht 11 korrekt auf dem Lastaufnehmer 2 platzieren zu können, kann die erhaltene Soll-Position des Prüfgewichts 11 z. B. auf der Hauptanzeige 7 der Waage 1 angezeigt oder anderweitig, z. B. über ein Headset einer Bedienperson mitgeteilt werden. Umgekehrt kann die Auswerteeinrichtung 5 Ist-Informationen 18 wie die von dem Echtzeit-Lokalisierungssystem 9 erfasste Kennung und Position des Prüfgewichts 11 und seinen von der Auswerteeinrichtung 5 ermittelten Gewichtswert an die entfernte Stelle 16 übertragen.

Von der entfernten Stelle 16 aus kann per Fernwartung anhand eines, z. B. dort vorhandenen, digitalen Zwillings 19 der Waage 1 exakt vorgegeben werden, welche Prüfgewichte 11 wo auf der Waage 1 aufgebracht werden sollen, um eine eichkonforme Prüfung durchzuführen. Im Umkehrschluss kann aus der Ferne genau geprüft werden, wo sich die Prüfgewichte 11 aktuell befinden. Zusätzlich können alle erwähnten Ist- und Solinformationen abgespeichert werden, um eine exakte Rückverfolgbarkeit zu gewährleisten.

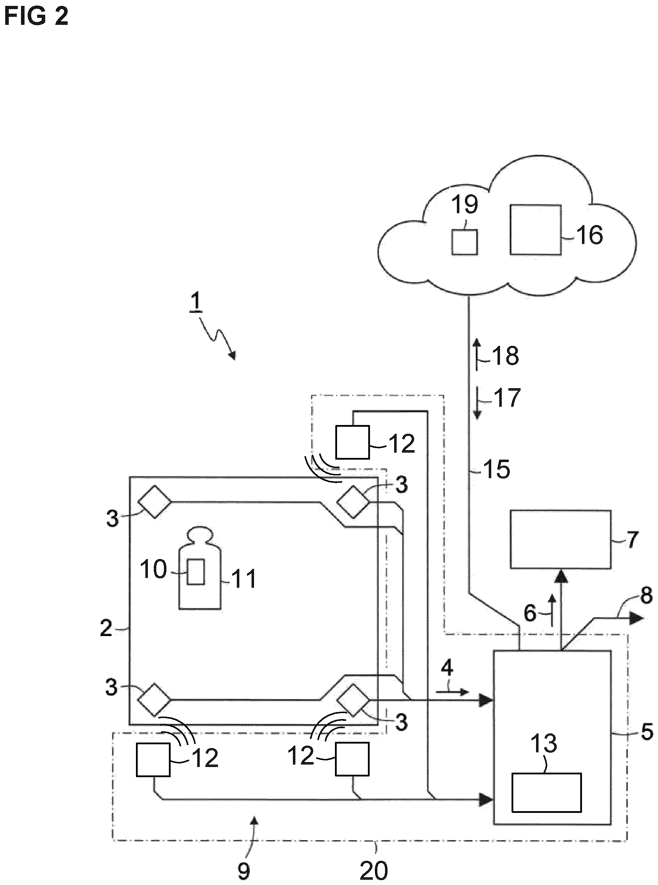

Das in Figur 2 gezeigte Ausführungsbeispiel der erfindungsgemäßen Wägeeinrichtung unterscheidet sich von dem nach Figur 1 dadurch, dass das Echtzeit-Lokalisierungssystem 9 zusammen mit der den Lokalisierungsrechner 13 beinhaltenden Auswerteeinrichtung 5 in einem versiegelbaren Gehäuse 20 angeordnet ist, so dass die Integrität der erfassten und an die Auswerteeinrichtung 5 übertragenen Informationen über die Kennung und die Position des Prüfgewichts 11 sichergestellt ist.

## Patentansprüche

1. Wägeeinrichtung mit einem Lastaufnehmer (2) zum Erfassen des Gewichts von Wägegut, einer Auswerteeinrichtung (5) zum Ermitteln eines Gewichtswerts anhand des von dem Lastaufnehmer (2) erfassten Gewichts und einem Echtzeit-Lokalisierungssystem (9), das einen Lokalisierungsrechner (13) umfasst, der dazu ausgebildet ist, eine Kennung und die Position des mit dem Lokalisierungs-Tag (10) versehenen Prüfgewichts (11) auf dem Lastaufnehmer (2) zu ermitteln und an die Auswerteeinrichtung (5) zu übermitteln, die dazu ausgebildet ist, anhand der ermittelten Kennung und Position des Prüfgewichts (11) und seines ermittelten Gewichtswerts eine automatische Überprüfung der Wägeeinrichtung herbeizuführen, **dadurch gekennzeichnet, dass** das Echtzeit-Lokalisierungssystem (9) mit mehreren festen Referenzpunkten (12) versehen ist, die als Empfangsmodule ausgebildet sind und dazu ausgebildet sind, Signallaufzeiten zu einem Lokalisierungs-Tag (10) zu messen und drahtgebunden oder über Funk an den Lokalisierungsrechner (13) des Echtzeit-Lokalisierungssystems (9) zu übermitteln, der die Messungen in eine tatsächliche Position umrechnet.

2. Wägeeinrichtung nach Anspruch 1, **dadurch gekennzeichnet, dass** die Auswerteeinrichtung (5) über eine sichere Verbindung (15) zu einer entfernten Stelle (16) verfügt, um von dieser Soll-Informationen (17) in Bezug auf das Prüfgewicht (11) zu erhalten und/oder an diese Ist-Informationen (18) in Bezug auf das Prüfgewicht (11) zu übermitteln, wobei die Soll-Informationen (17) die tatsächliche Kennung des Prüfgewichts (11), sein tatsächliches Gewicht und/oder eine Soll-Position des Prüfgewichts (11) auf dem Lastaufnehmer (2) umfassen und die Ist-Informationen (18) die erfasste Kennung des Prüfgewichts (11), seine erfasste Position und/oder seinen ermittelten Gewichtswert umfassen.

3. Wägeeinrichtung nach Anspruch 2, **dadurch gekennzeichnet, dass** die Auswerteeinrichtung (5) dazu ausgebildet ist, die Ist-Informationen (18) mit einem Zeitstempel zu versehen.

4. Wägeeinrichtung nach Anspruch 2 oder 3, **dadurch gekennzeichnet, dass** an der Auswerteeinrichtung (5) eine Ausgabeeinheit (7) zur visuellen und/oder auditiven Ausgabe der Soll-Position für das Prüfgewicht (11) auf dem Lastaufnehmer (2) angeschlossen ist.

5. System umfassend die Wägeeinrichtung nach einem der Ansprüche 2 bis 4 und die entfernte Einrichtung, **dadurch gekennzeichnet, dass** die entfernte Einrichtung einen digitalen Zwilling (19) der Wägeeinrichtung enthält.

6. Verfahren zum Prüfen einer Wägeeinrichtung, wobei ein mit einem Lokalisierungs-Tag (11) versehenes Prüfgewicht (11) auf einem Lastaufnehmer (2) der Wägeeinrichtung platziert und sein Gewichtswert ermittelt wird, mittels eines Echtzeit-Lokalisierungssystems (9) eine Kennung und die Position des Prüfgewichts (11) auf dem Lastaufnehmer (2) automatisch ermittelt werden, und anhand der ermittelten Kennung und Position des Prüfgewichts (11) und seines ermittelten Gewichtswerts eine automatische Überprüfung der Wägeeinrichtung herbeigeführt wird, **dadurch gekennzeichnet, dass** das Echtzeit-Lokalisierungssystem (9) mehrere feste Referenzpunkte (12) umfasst, die als Empfangsmodule ausgebildet sind und die dazu ausgebildet sind, Signallaufzeiten zu einem Lokalisierungs-Tag (10) zu messen und drahtgebunden oder über Funk an einen Lokalisierungsrechner (13) zu übermitteln, der die Messungen in eine tatsächliche Position umrechnet.

7. Verfahren nach Anspruch 6, **dadurch gekennzeichnet, dass** die Wägeeinrichtung über eine sichere Verbindung (15) mit einer entfernten Stelle (16) kommuniziert, von der sie Soll-Informationen (17) in Bezug auf das Prüfgewicht (11) erhält und/oder an die sie Ist-Informationen (18) in Bezug auf das Prüfgewicht (11) übermittelt, wobei die Soll-Informationen (17) die tatsächliche Kennung des Prüfgewichts (11), sein tatsächliches Gewicht und/oder eine Soll-Position des Prüfgewichts (11) auf dem Lastaufnehmer (2) umfassen und die Ist-Informationen (18) die erfasste Kennung des Prüfgewichts (11), seine erfasste Position und/oder seinen ermittelten Gewichtswert umfassen.

8. Verfahren nach Anspruch 7, **dadurch gekennzeichnet, dass** die Ist-Informationen (18) mit einem Zeitstempel versehen werden.

9. Verfahren nach Anspruch 7 oder 8, **dadurch gekennzeichnet, dass** die Soll-Position des Prüfgewichts (11) auf dem Lastaufnehmer (2) an der Wägeeinrichtung visuell und/oder auditiv ausgegeben wird.

10. Verfahren nach Anspruch 7, 8 oder 9, **dadurch gekennzeichnet, dass** die Soll-Position des Prüfgewichts (11) automatisch anhand eines digitalen Zwillings (18) der Wägeeinrichtung ermittelt wird.

## Claims

1. Weighing device with a load receptor (2) for capturing the weight of the goods to be weighed, an evaluation device (5) for determining a weight value on the basis of the weight captured by the load receptor (2) and a real-time localisation system (9), which comprises a localisation computer (13), which is embodied to determine an identifier and the position of the check weight (11) provided with the localisation tag (10) on the load receptor (2) and to transfer the same to the evaluation device (5), which is embodied to effectuate an automatic check of the weighing device on the basis of the determined identifier and position of the check weight (11) and its determined weight value, **characterised in that** the real-time localisation system (9) is provided with several solid reference points (12) which are embodied as receiving modules and are embodied to measure signal delay times relating to a localisation tag (10) and to transfer the same in a wire bound manner or via radio to the localisation computer (13) of the real-time localisation system (9) which calculates the measurements in an actual position.

2. Weighing device according to claim 1, **characterised in that** the evaluation device (5) has a secure connection (15) to a remote location (16), in order to obtain herefrom target information (17) relating to the check weight (11) and/or to transfer the same to this actual information (18) in respect of the check weight (11), wherein the target information (17) comprises the actual identifier of the check weight (11), its actual weight and/or a target position of the check weight (11) on the load receptor (2) and the actual information (18) comprises the captured identifier of the check weight (11), its captured position and/or its determined weight value.

3. Weighing device according to claim 2, **characterised in that** the evaluation device (5) is embodied to provide the actual information (18) with a time stamp.

4. Weighing device according to claim 2 or 3, **characterised in that** an output unit (7) for outputting the target position for the check weight (11) in a visual and/or auditory manner on the load receptor (2) is connected to the evaluation device (5).

5. System comprising the weighing device according to one of claims 2 to 4 and the remote device, **characterised in that** the remote device contains a digital twin (19) of the weighing device.

6. Method for checking a weighing device, wherein a check weight (11) provided with a localisation tag (11) is placed on a load receptor (2) of the weighing device and its weight value is determined, by means of a real-time localisation system (9), an identifier and the position of the check weight (11) on the load receptor (2) are determined automatically and an automatic check of the weighing device is effectuated on the basis of the determined identifier and position of the check weight (11) and its determined weight value, **characterised in that** the real-time localisation system (9) comprises a number of fixed reference points (12) which are embodied as receiving modules and which are embodied to measure signal delay times relating to a localisation tag (10) and to transfer the same in a wired manner or via radio to a localisation computer (13) which converts the measurements into an actual position.

7. Method according to claim 6, **characterised in that** the weighing device communicates with a remote location (16) via a secure connection (15), from which it obtains target information (17) in respect of the check weight (11) and/or to which it transfers actual information (18) in respect of the check weight (11), wherein the target information (17) comprises the actual identifier of the check weight (11), its actual weight and/or a target position of the check weight (11) on the load receptor (2), and the actual information (18) comprises the captured identifier of the check weight (11), its captured position and/or its determined weight value.

8. Method according to claim 7, **characterised in that** the actual information (18) is provided with a time stamp.

9. Method according to claim 7 or 8, **characterised in that** the target position of the check weight (11) on the load receptor (2) is output on the weighing device in a visual and/or auditory manner.

10. Method according to claim 7, 8 or 9, **characterised in that** the target position of the check weight (11) is determined automatically on the basis of a digital twin (18) of the weighing device.

## Revendications

1. Dispositif de pesée comprenant un enregistreur (2) de charge pour la détection du poids du produit de pesée, un dispositif (5) d'évaluation pour la détermination d'une valeur du poids à l'aide du poids détecté par l'enregistreur (2) de charge et un système (9) de localisation en temps réel, qui comprend un ordinateur (13) de localisation, qui est constitué pour déterminer une identification et la position du poids (11) de contrôle munie de l'étiquette (10) de localisation sur l'enregistreur (2) de charge et les transmettre au dispositif (5) d'évaluation, qui est constitué pour provoquer, à l'aide de l'identification et de la position déterminées du poids (11) de contrôle et de sa valeur de poids déterminés, un contrôle automatique du dispositif de pesée, **caractérisé en ce que** le système (9) de localisation en temps réel est pourvu de plusieurs points (12) fixes de référence, qui sont constitués sous la forme de modules de réception et qui sont constitués pour mesurer des temps de signal à une étiquette (10) de localisation et les transmettre par fil ou par radio à l'ordinateur (13) de localisation du système (9) de localisation en temps réel, lequel transforme par le calcul les mesures en une position réelle.

2. Dispositif de pesée suivant la revendication 1, **caractérisé en ce que** le dispositif (5) d'évaluation dispose d'une liaison (15) sécurisée avec un point (16) éloigné, pour en recevoir des informations (17) de consigne en ce qui concerne le poids (11) de contrôle et/ou pour y transmettre des informations (18) réelles en ce qui concerne le poids (11) de contrôle, dans lequel les informations (17) de consigne comprennent l'identification réelle du poids (11) de contrôle, son poids réel et/ou une position réelle du poids (11) de contrôle sur l'enregistreur (2) de charge et les informations (18) réelles comprennent l'identification détectée du poids (11) de contrôle, sa position détectée et/ou sa valeur de poids détectée.

3. Dispositif de pesée suivant la revendication 2, **caractérisé en ce que** le dispositif (5) d'évaluation est constitué pour munir les informations (18) réelles d'un horodatage.

4. Dispositif de pesée suivant l'une des revendications 2 ou 3, **caractérisé en ce que** le dispositif (5) d'évaluation est raccordé une unité (7) de sortie pour la sortie visuelle et/ou auditive de la position de consigne du poids (11) de contrôle sur l'enregistreur (2) de charge.

5. Système comprenant le dispositif de pesée suivant l'une des revendications 2 à 4 et le dispositif éloigné, **caractérisé en ce que** le dispositif éloigné comporte un double (19) numérique du dispositif de pesée.

6. Procédé de contrôle d'un dispositif de pesée, dans lequel on place un poids (11) de contrôle pourvu d'une étiquette (11) de localisation sur un enregistreur (2) de charge du dispositif de pesée et on détermine sa valeur du poids, au moyen d'un système (9) de localisation en temps réel on détermine automatiquement une identification et la position du poids (11) de contrôle sur l'enregistreur (2) de charge et, à l'aide de l'identification et de la position déterminées du poids (11) de contrôle et de la valeur déterminée de son poids, on provoque un contrôle automatique du dispositif de pesée, **caractérisé en ce que** le système (9) de localisation en temps réel comprend plusieurs points (12) fixes de référence, qui sont constitués sous la forme de modules de réception et qui sont constitués pour mesurer des temps de signal à une étiquette (10) de localisation et les transmettre par fil ou par radio à un ordinateur (13) de localisation, lequel transforme par le calcul les mesures en une position réelle.

7. Procédé suivant la revendication 6, **caractérisé en ce que** le dispositif de pesée communique par une liaison (15) sécurisée avec un point (16) éloigné, dont il reçoit des informations (17) de consigne en ce qui concerne le poids (11) de contrôle et/ou auquel il transmet des informations (18) réelles en ce qui concerne le poids (11) de contrôle, dans lequel les informations (17) de consigne comprennent l'identification réelle du poids (11) de contrôle, son poids réel et/ou une position de consigne du poids (11) de contrôle, son poids réel et/ou une position de consigne du poids (11) de contrôle sur l'enregistreur (2) et les informations (18) réelles comprennent une identification détectée du poids (11) de contrôle, la position détectée et/ou la valeur déterminée de son poids.

8. Procédé suivant la revendication 7, **caractérisé en ce que** l'on munit les informations (18) réelles d'un horodatage.

9. Procédé suivant la revendication 7 ou 8, **caractérisé en ce que** l'on donne visuellement et/ou auditivement au dispositif de pesée la position de consigne du poids (11) de contrôle sur l'enregistreur (2) de charge.

10. Procédé suivant la revendication 7, 8 ou 9, **caractérisé en ce que** l'on détermine automatiquement, à l'aide d'un double (18) numérique du dispositif de pesée la position de consigne du poids (11) de contrôle.
